# EUROPÄISCHE PATENTSCHRIFT

(11) **EP 1 443 221 B1**
(45) Veröffentlichungstag und Bekanntmachung des Hinweises auf die Patenterteilung: **07.05.2008**
(21) Anmeldenummer: 04001514.1
(22) Anmeldetag: 24.01.2004
(51) Int. Cl.: F15B 21/04, F15B 11/16, F16K 17/04

(54) **Ventileinrichtung und hydraulisches System**
Valve device and hydraulic system
Dispositif de soupape et système hydraulique

(30) Priorität: 29.01.2003 DE 10303418
(43) Veröffentlichungstag der Anmeldung: 04.08.2004
(73) Patentinhaber: Voith Turbo GmbH & Co. KG, 89522 Heidenheim (DE)
(72) Erfinder: Busch, Jörg, Dr., 89551 Königsbronn-Zang (DE)
(74) Vertreter: Dr. Weitzel & Partner

(56) Entgegenhaltungen:
- DE-A1- 3 309 435
- US-A- 4 192 337
- US-A- 4 244 389

## Beschreibung

Die Erfindung betrifft ein hydraulisches System mit einer Ventileinrichtung, im einzelnen mit den Merkmalen aus dem Oberbegriff des Anspruchs 1.

Ventileinrichtungen in Form von Druckregelventilen für den Einsatz in hydraulischen Kreisläufen sind hinlänglich bekannt. Die Funktion eines derartigen Druckregelventils besteht im wesentlichen darin, einen bestimmten Druck oder auch Druckverlauf im System sicherzustellen. Dabei wird im allgemeinen die einen höheren Druck hervorrufende überschüssige Menge an Betriebsmittel abgeströmt. Dies findet bei bekannten Ventilausführungen im Ventil, d. h. nach der Kopplung der Zuflußleitung mit dem Zulauf statt. Ein wesentlicher Nachteil dieser Ausführung besteht darin, dass auch alle Funktionselemente in Strömungsrichtung vor diesem Ventil, z. B. in Form von Filtern und Wärmetauschern, dadurch mit der gesamten Menge Betriebsmittel und nicht nur der tatsächlich zum Aufbau des Druckes benötigten Menge durchströmt werden. Dadurch ergeben sich in der Praxis sehr hohe Belastungen der vorgeschalteten Funktionselemente. Des weiteren sind die über diesen Elementen anfallenden Druckverluste nicht zu vernachlässigen. Bekannte Lösungen zur Reduzierung der Menge durch Regelung des Zuflusses, z. B. eine regelbare Pumpe, erfordern einen erheblichen zusätzlichen Aufwand und die Reaktionszeiten einer derartigen Einheit sind für viele Anwendungsfälle einfach zu langsam.

Der Erfindung liegt daher die Aufgabe zugrunde, ein hydraulisches System mit einer Ventileinrichtung, insbesondere einem Druckregelventil der eingangs genannten Art derart weiterzuentwickeln, dass zum einen der Arbeitsdruck mit geringem Aufwand einsteuerbar ist und des weiteren die Druckverluste durch dem Zulauf vorgeschaltete Funktionselemente verringert werden. Des weiteren sollen auch diese vorgeschalteten Funktionselemente im Dauerbetrieb geringer belastet werden, so dass keine entsprechende Überdimensionierung auf die maximale Zuflußmenge mehr stattfinden muss.

Die erfindungsgemäße Lösung ist durch die Merkmale des Anspruchs 1 charakterisiert. Vorteilhafte Ausgestaltungen sind in den Unteransprüchen beschrieben.

Die Ventileinrichtung, insbesondere ein Druckregelventil des hydraulischen Systems, umfasst ein Ventilgehäuse und ein axial in diesem verschiebbar gelagerten Ventilkolben, welcher einseitig mit einer Energiespeichereinrichtung zur Erzeugung einer Gegenkraft zur Kraft in der Druckkammer und Definition der Öffnungsdrücke beaufschlagbar ist, die diesen im entlasteten Zustand in seine Neutral-Position verbringt, und erfindungsgemäß Mittel zur Realisierung einer oder mehrerer Abströmfunktionen. Diese kann in hydraulischen Systemen zur Druckregelung oder Begrenzung eingesetzt werden. Der Kolben weist dabei Bereiche unterschiedlichen Durchmessers auf, wobei die steuerkantenbildenden Bereiche druck- und flüssigkeitsdicht am Gehäuse führbar sind. Diese Bereiche unterschiedlichen Durchmessers bilden sogenannte Kammern, eine Arbeitskammer und eine Abströmkammer sowie eine, vom Ventilkolben und dem Ventilgehäuse begrenzte und hinsichtlich ihrer Abmessungen veränderbare Druckkammer. Die Arbeitskammer ist über einen im Gehäuse angeordneten Zulauf, welcher mit der Zuflussleitung koppelbar ist und einen Ablauf verbindbar. Dies gilt auch für die Abströmkammer, welcher ein separater Abströmzulauf und Abströmablauf zugeordnet sind. Die Abströmkammer ist dabei erfindungsgemäß frei von einer Verbindung zur Arbeitskammer und dem Zulauf der Arbeitskammer. Dabei sind der Abströmzulauf und der Abströmablauf entweder in axialer Richtung zueinander versetzt, d. h. in zwei unterschiedlichen axialen Ebenen oder in einer Ebene angeordnet. Der Abströmzulauf ist über eine Verbindungsleitung in Strömungsrichtung betrachtet vor den Funktionselementen, die einen Wärmetauscher und/oder eine Filtereinrichtung umfassen, mit der Zuflußleitung gekoppelt. Die Ausgestaltung des Ventilkolbens, insbesondere die Dimensionierung der einzelnen Bereiche unterschiedlichen Durchmessers in axialer Richtung ist so bemessen, dass der Ventilkolben bis zum Erreichen eines vordefinierten Maximaldruckes in der Arbeitskammer den Zulauf zur Abströmkammer freigibt, jedoch den Abströmablauf versperrt. Erst bei Überschreitung dieses Druckes erfolgt eine Freigabe der Verbindung zwischen dem Abströmzulauf und dem Abströmablauf. Der Abströmzulauf ist dabei mit der Zuflußleitung gekoppelt, wobei die Kopplung in Strömungsrichtung des Betriebsmediums vor den Funktionselementen mit der Zuflußleitung erfolgt. Die Steuerung der Lage des Ventilkolbens erfolgt über das einstellbare Kräftegleichgewicht von Druckkammer und Energiespeichereinrichtung, welche als Federeinheit oder weitere Druckkammer ausgeführt sein kann. Dadurch erfolgt auch die Steuerung der Freigabe oder Sperrung von Zulauf und Ablauf des Arbeitsraumes.

Die erfindungsgemäße Lösung ermöglicht es, mit einem Ventilkolben, jedoch völlig getrennt, den Arbeitsdruck im System, d. h. der an die Arbeitskammer gekoppelten Ablaufleitung durch Abströmen von Betriebsmittel vor den vorgeschalteten Elementen zu steuern. Damit wird erreicht, dass die vorgeschalteten Elemente - Wärmetauscher oder Kühleinrichtung oder Filter -, die sich zwischen den beiden Anschlüssen der Ventileinrichtung, insbesondere des Druckregelventiles, befinden, nur noch von der tatsächlich benötigten Betriebsmittelmenge des Systems durchströmt werden und somit die Gesamtbelastung geringer ist und keine zusätzlichen Druckverluste erzeugt werden. Dabei hat die verringerte oder keine Verlustleistung auch einen erheblichen Einfluss auf die Gesamtverlustleistung des Gesamtsystems.

Bezüglich der konkreten Ausführungen des Ventilkolbens bestehen dabei mehrere Möglichkeiten. Dies hängt insbesondere auch von den erforderlichen Anschlüssen an den Verbraucher ab. Unterschieden wird dabei zwischen Ventilanordnungen mit einem Anschluss, d. h. einem Ablauf zum Verbraucher und mehreren Abläufen. Die Arbeitskammer kann dabei in axialer Richtung neben der Abströmkammer angeordnet sein, wobei die Abströmkammer in axialer Richtung dann beispielsweise zwischen Arbeitskammer und Energiespeichereinheit angeordnet ist. Wesentlich ist, dass die Dimensionierung der einzelnen Kolbenbereiche in axialer Richtung derart erfolgt, dass bei Erreichen eines bestimmten vordefinierten Arbeitsdruckes eine Verschiebung des Kolbens eine Freigabe des Abströmablaufes bewirkt. Die Anordnung von Betriebsmittelzulauf und Betriebsmittelablauf im Ventilgehäuse, insbesondere die axiale Anordnung zueinander - mit Versatz oder ohne Versatz - bestimmt dabei die Ventilkolbenform, insbesondere die Lage der Steuerkanten, erheblich mit. Dabei werden bei Ausführungen mit einem Ablauf vom Arbeitsraum, welcher in einer Ebene mit dem Zulauf in axialer Richtung betrachtet angeordnet ist oder aber bei Ausführungen mit mehreren Abläufen, wobei einer der Abläufe im wesentlichen in einer Ebene mit dem Zulauf angeordnet ist, ein Druckraum vorgesehen, der lediglich zur Beaufschlagung des Kolbens zum Zwecke des Verschiebens vorgesehen ist. In diesem Fall wird noch einmal ein Betriebsmittelstrom abgezweigt, der allein der Beaufschlagung des Kolbens dient. Die Abzweigung kann dabei an belichteter Stelle der Zuflussleitung erfolgen. Entscheidend ist die Anordnung der Druckkammer im Ventilgehäuse gegenüber der Arbeitskammer. Herrscht dabei zwischen der Druckkammer, welche frei von einem Ablauf und der Energiespeichereinrichtung ist - Kraftgleichgewicht, erfolgt keine Verschiebung am Kolben mehr. Die Funktionsstellung ist erreicht. Wird jedoch der Druck in der Druckkammer wieder größer, verschiebt sich der Kolben in axialer Richtung entgegen der Vorspanneinrichtung, welche vorzugsweise in Form einer Federeinheit ausgeführt ist und bewirkt eine Freigabe zwischen dem Zulauf und einem weiteren Ablauf und bei weiterer Verschiebung auch dem Abströmzulauf und dem Abströmablauf. Die Verschiebung des Kolbens erfolgt dabei immer nur entsprechend dem Kräftegleichgewicht zwischen Druckkammer und Vorspanneinrichtung. Die Vorspanneinrichtung kann dabei als Federeinheit oder aber ebenfalls in Form einer weiteren Druckkammer ausgebildet sein. Die axialen Abmessungen der einzelnen Bereiche unterschiedlichen Durchmessers, die die Steuerkanten bilden, und, insbesondere im Bereich der Abströmkammer bzw. der dieser benachbarten Bereiche größeren Durchmessers, welche im Gehäuse druck- und flüssigkeitsdicht geführt werden, erfolgt derart, dass der Abstand der Steuerkante zum Verschließen des Abströmablaufes, und der Steuerkante, welche den Ablauf aus der Arbeitskammer verschließt und der sich somit aus den Abmessungen der Abströmkammer in axialer Richtung und dem den Arbeitsraum begrenzenden Bereich größeren Durchmessers ergibt, nicht größer als die axiale Abmessung zwischen dem Abströmablauf und dem Ablauf aus dem Arbeitsraum ist.

Bei einer zweiten besonders kompakten Ausführungsmöglichkeit wird der Druckraum gleichzeitig vom Arbeitsraum gebildet. Dabei ist vorzugsweise lediglich nur ein Ablauf vorgesehen. Dieser und der Zulauf zur Arbeitskammer können in axialer Richtung zueinander betrachtet, versetzt in zwei Ebenen angeordnet werden, wenn der Kolben den Arbeitskammerablauf verschließen kann. Die Anordnung kann jedoch auch in einer Ebene erfolgen.

Die erfindungsgemäße Lösung wird nachfolgend anhand von Figuren erläutert. Darin ist im einzelnen folgendes dargestellt:
- Fig. 1: verdeutlicht in schematisch vereinfachter Darstellung eine erste Ausgestaltungsmöglichkeit einer erfindungsgemäß gestalteten Ventileinrichtung;
- Fig. 2: verdeutlicht in schematisch vereinfachter Darstellung eine zweite Ausgestaltungsmöglichkeit einer erfindungsgemäß gestalteten Ventileinrichtung;
- Fig. 3: verdeutlicht die Ventileinrichtung gemäß Figur 1 in der Grundstellung;
- Fig. 4: verdeutlicht eine Ausführung der Ventileinrichtung gemäß Figur 2 mit einem weiteren Ablauf;
- Fig. 5: verdeutlicht eine Ausführung der Ventileinrichtung gemäß Figur 2 mit einem Ablauf und Versatz dessen, zum Zulauf in axialer Richtung;
- Fig. 6: verdeutlicht eine weitere Abwandlung der Ausführung gemäß Figur 2.

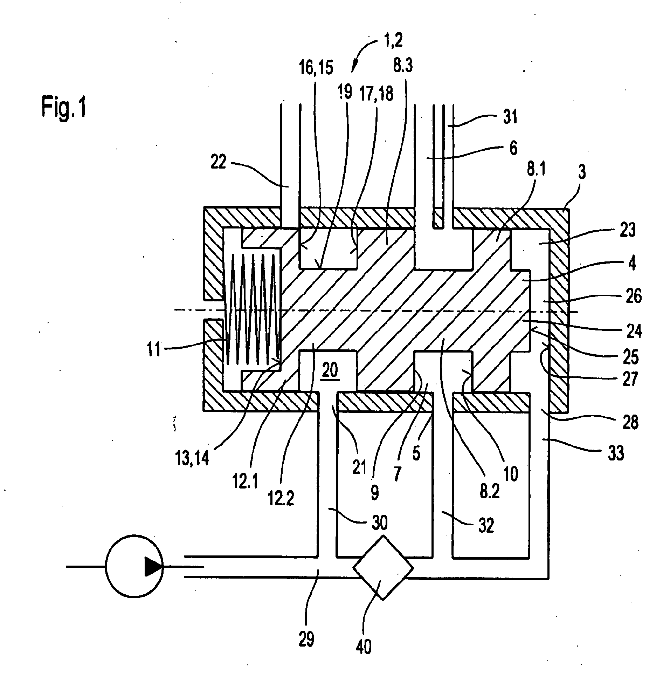

Die Figur 1 verdeutlicht in schematisierter Darstellung eine erste Ausführung eines erfindungsgemäß gestalteten hydraulischen Systems mit einer Ventileinrichtung 1, insbesondere in Form eines Druckregelventiles 2 anhand eines Ausschnittes aus einem hydraulischen System. Die Ventileinrichtung 1 umfaßt ein Ventilgehäuse 3 und einen Ventilkolben 4. Der Ventilkolben 4 ist verschiebbar im Ventilgehäuse 3 gelagert. Die Ventileinrichtung 1 umfaßt mindestens einen Zulauf 5 und mindestens einen Ablauf 6, welcher mit einem Verbraucher koppelbar ist. Die Verbindung zwischen dem Zulauf 5 und dem Ablauf 6 erfolgt über eine Arbeitskammer 7. Die Arbeitskammer 7 wird im dargestellten Fall durch Bereiche unterschiedlichen Durchmessers 8.1 und 8.2 und 8.3 am Ventilkolben 4 gebildet. Zusätzlich bestände auch die Möglichkeit, das Gehäuse 3 mit unterschiedlichen Durchmessern auszugestalten. Allerdings ist dann der Einfluss auf die Kolbenbewegung wegen nicht ausgeglichener Druckkräfte mit zu berücksichtigen.

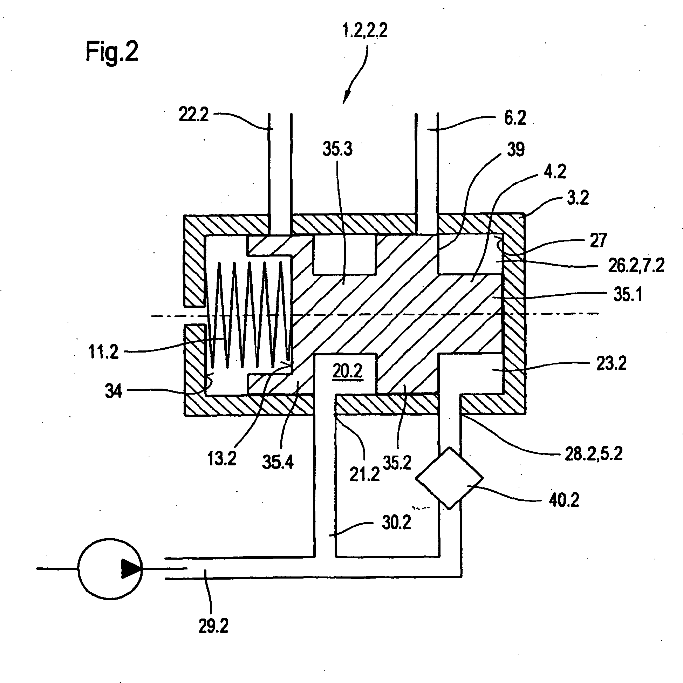

Bei den in den Figuren 1 und 2 dargestellten Ausführungen werden die einzelnen Kammern gemäß einer bevorzugten Ausgestaltung durch die unterschiedlichen Abmessungen des Kolbens in radialer Richtung realisiert.
Die Bereiche 8.1 und 8.3 sind hinsichtlich ihres Durchmessers derart ausgeführt, dass der Ventilkolben 4 in diesen Bereichen dicht im Ventilgehäuse 3 geführt wird. Der Bereich 8.2 weist einen geringeren Durchmesser als die beiden benachbarten Bereiche 8.1 und 8.3 auf. Die dadurch gebildeten Steuerkanten 9 und 10 sowie der Außenumfang des Ventilkolbens 4 im Bereich 8.2 beschreiben dabei die Arbeitskammer 7. Entsprechend der Stellung des Ventilkolbens 4 im Ventilgehäuse 3 gegenüber dem Zulauf 5 und dem Ablauf 6 dient die Arbeitskammer 7 der Verbindung zwischen dem Zulauf 5 und dem Ablauf 6, der mit einem Verbraucher koppelbar ist. Dabei sind die Anschlüsse zwischen dem Zulauf 5 und dem Ablauf 6 im dargestellten Fall in axialer Richtung zueinander versetzt angeordnet, so dass der Ventilkolben 4 im entlasteten Zustand eine Stellung einnimmt, welche die Verbindung zwischen dem Zulauf 5 und dem Ablauf 6 sperrt, im einzelnen wird dabei der Ablauf 6 durch den Bereich 8.3 verdeckt, während der Bereich 8.2 über dem Zulauf 5 steht und damit eine Verbindung zwischen dem Zulauf 5 und der Arbeitskammer 7 gegeben ist. Bei Zuströmen des Betriebsmittels über den Zulauf 5 wird dann mit wachsendem Druck in einer Druckkammer 26 der Ventilkolben 4 in Richtung des Ablaufes 6 gedrückt, bis die Verbindung zwischen Zulauf 5 und Ablauf 6 freigegeben wird. Der Ventilkolben 4 wird dabei gegen eine Federeinrichtung 11 verschoben, welche zwischen dem Ventilgehäuse 3 und dem Ventilkolben 4 angeordnet ist und im entlasteten Zustand, d. h. bei Nichtzufuhr von Arbeitsmittel zum Verbraucher den Ventilkolben aufgrund der Federkraft in eine Stellung befördert, welche den Ablauf 6 versperrt. Die Federeinrichtung 11 ist dabei als Druckfeder ausgeführt. Bei konventionellen Lösungen sind in der mit dem Zulauf 5 gekoppelten Zuflussleitung 29 ein Filter, Wärmetauscher oder anderes Funktionselement 40 vorgesehen, welche mit der gesamten Durchflussmenge beaufschlagt werden, wobei die eigentliche Funktion als Druckregelventil bzw. Druckbegrenzungsventil erst innerhalb der Ventileinrichtung durch Abströmen von Betriebsmedium realisiert wird, wobei das Abströmen erst nach dem Zulauf in der Ventileinrichtung erfolgt. Zur Vermeidung des damit unnötig verbundenen Durchströmens der Funktionselemente, Filter und Wärmetauscher mit dem Betriebsmedium ist erfindungsgemäß vorgesehen, dass der Ventilkolben 4 den Arbeitsdruck im System, d. h. in dem mit einem Verbraucher koppelbaren Anschluss am Ablauf 6 durch Abströmen des Mediums vor den vorgeschalteten Elementen, wie z. B. Filter und/oder Wärmetauscher, steuert. Dazu weist der Ventilkolben 4 zwei weitere Bereiche unterschiedlichen Durchmessers, hier 12.1 und 12.2, auf, welche im dargestellten Fall an den Bereich unterschiedlichen Durchmessers 8.3 angrenzen. Die Federeinrichtung 11 ist dabei zwischen dem Ventilgehäuse 3 und der zum Ventilgehäuse hingewandten Stirnfläche 13 des Ventilkolbens 4, welche von der Stirnfläche 14 am Bereich unterschiedlichen Durchmessers 12.1 gebildet wird, angeordnet. Die beiden Bereiche unterschiedlichen Durchmessers 12.1 und 12.2 bilden des weiteren Steuerkanten, eine erste Steuerkante 15, welche von der von der Federeinrichtung 11 weggerichteten Stirnfläche 16 am Bereich 12.1 gebildet wird und eine zweite Steuerkante 17, die von der an dem Bereich 12.2 angrenzenden Stirnfläche 18 am Bereich unterschiedlichen Durchmessers 8.3 gebildet wird. Die Steuerkanten 15 und 17 sowie der Außenumfang 19 im Bereich 12.2 bilden eine Abströmkammer 20. Die Steuerkanten 15 und 17 dienen dabei der Trennung des Raumes 20 von 7. Die Abströmkante 20 ist mit einem im Ventilgehäuse 3 angeordneten Abströmzulauf 21 und einem Abströmablauf 22 koppelbar. Die Kopplung erfolgt hier über die Stellung des Ventilkolbens 4. Die Anordnung der Bereiche unterschiedlichen Durchmessers im Ventilkolben 4 bzw. die Funktionszuordnung zueinander kann auch anders erfolgen. Wesentlich ist jedoch, dass der Abströmzulauf 21 in Strömungsrichtung vor den Funktionselementen 40, d.h. dem Wärmetauscher und/oder Filter über einen Leitungsabschnitt mit der Zuflussleitung 29 verbunden ist. Auch hier sind Abströmzulauf 21 und Abströmablauf 22 im Ventilgehäuse 3 in axialer Richtung betrachtet versetzt zueinander angeordnet. Bei der in der Figur 1 dargestellten Ausführung weist der Ventilkolben 4 ferner einen weiteren Abschnitt mit geringerem Durchmesser als das Ventilgehäuse 3, insbesondere der Innenraum 23 des Ventilgehäuses 3, auf. Dieser Abschnitt geringeren Durchmessers ist mit 24 bezeichnet und bildet die, von der Federeinrichtung 11 weggerichtete Stirnfläche 25 des Ventilkolbens 4. Damit beschreibt dieser Bereich geringeren Durchmessers 24 mit dem angrenzenden Bereich 8.1 sowie dem Innenraum 23 des Ventilgehäuses 3 eine weitere Kammer, die auch als Druckkammer 26 bezeichnet wird, welche mit dem Betriebsmittelzufluss koppelbar ist, wobei die Kopplung analog zu der der Arbeitskammer 7 erfolgt und die Anbindung an die Zuflußleitung 29 hinter den Funktionselementen 40 Wärmetauscher, Filter etc. vorgesehen ist. Bei der Ausführung mit gleichbleibender Gehäuseinnenkammer bzw. Gehäuseinnenraum 23 ist diese Kammer ausschließlich für die Regelung, d. h. gewünschte Kolbenbewegung, verantwortlich. Der Bereich geringeren Durchmessers 24 ist nur notwendig, wenn der Zufluss 28 von der Seite kommt, da sich sonst der Regelzufluß 28 für immer verschließen würde, wenn einmal kein Druck anliegt. Dies bedeutet, dass der Zufluss 28 immer offen gehalten wird. Auf den Bereich geringeren Durchmessers 24 könnte verzichtet werden, wenn der Zulauf 28 anstatt wie in Figur 1 dargestellt in radialer Richtung in axialer Richtung von rechts verlaufen würde. Die Anordnung der Druckkammer 26 im Ventilgehäuse kann in axialer Richtung auch anders gegenüber der Arbeitskammer 7 erfolgen, beispielsweise auf der Seite, auf welcher in Figur 1 die Energiespeichereinrichtung vorgesehen ist. Diese ist dann analog dem anderen Kolbenende zuzuordnen (beispielsweise Zugfeder statt Druckfeder).

Die Funktionsweise gestaltet sich dabei wie folgt:

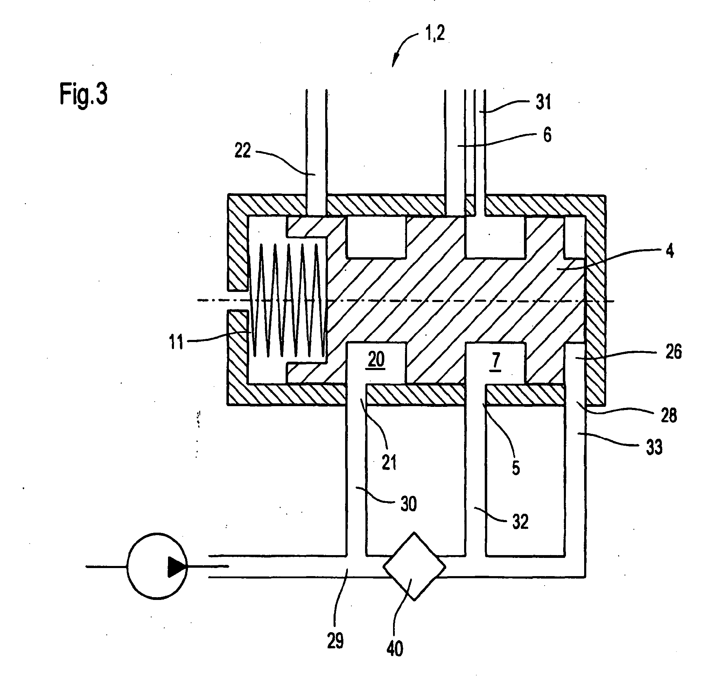

Im vollständig entlasteten Zustand wird der Ventilkolben 4 allein durch die Kraft der Federeinrichtung 11 an seiner Stirnfläche 13 beaufschlagt. Dieser befindet sich dabei in einer Stellung, bei welcher die Stirnfläche 25 an der den Innenraum 23 in axialer Richtung begrenzenden Stirnfläche 27 im Ventilgehäuse 3 anliegt, wie in Figur 3 dargestellt, oder aber mit dieser einen Zwischenraum bildet. Die einzelnen Bereiche unterschiedlichen Querschnittes bzw. Durchmessers 8.1 bis 8.3, 12.1, 12.2 und 24 sind dabei hinsichtlich ihrer axialen Erstreckung derart ausgelegt, dass im entlasteten Zustand der Abströmablauf 22 versperrt ist. Der Abströmzulauf 21 sowie der Zulauf 5 sind jedoch mit der Abströmkammer 20 bzw. der Arbeitskammer 7 gekoppelt. Dies gilt auch für einen weiteren, hier vorgesehenen zweiten Zulauf 28 zur Druckkammer 26, der an die Zuflussleitung 29 hinter den Funktionselementen 40, Wärmetauscher und/oder Filter gekoppelt ist. Ein Teil des in der Zuflussleitung 29 geführten Betriebsmittels strömt über die Verbindungsleitung 30 zum Abströmzulauf 21 und von dort in die Abströmkammer 20. Dies geschieht so lange, wie der Abströmzulauf 21 freigegeben ist. Des weiteren wird über die Zuflussleitung 29 jeweils Betriebsmittel in die Arbeitskammer 20 und die Druckkammer 26 über den Zulauf 5 und den Zulauf 28 geleitet. Dabei baut sich in der Druckkammer 26 ein Druck auf. Bei der in der Figur 1 dargestellten Ausführung kann zusätzlich noch ein weiterer zweiter Ablauf 31 vorgesehen werden, welcher die erste Arbeitskammer 7 mit einem weiteren Verbraucher koppelt. Der zweite Ablauf 31 ist dabei in axialer Richtung an einer Ebene mit dem Zulauf 5 angeordnet, weshalb über die Verbindungsleitung 32 mit der Zuflussleitung 29 zum Zulauf 5 Betriebsmittel über die erste Arbeitskammer 7 auch ohne Verschiebung des Kolbens 4 bereits Betriebsmittel direkt zum zweiten Ablauf 31 und damit Verbraucher geleitet wird. Der Ablauf 6 ist in diesem Zustand noch verschlossen. Der Ablauf 31 bildet hier einen kleinen gedrosselten Abfluss.

Im Druckraum 26 wird ein höherer Druck eingestellt. Der Abfluss 6 ist geöffnet. Somit besteht die Möglichkeit einer Regelung des Arbeitsdruckes in zwei Stufen. Denkbar, jedoch hier nicht dargestellt, ist das Vorsehen mehrerer gedrosselter und/oder ungedrosselter Ausgänge in beliebigen Stellungen, je nach gewünschter Stufung der Arbeitsdruckregelung. Die zusätzlichen (gedrosselten) Ausgänge werden auch zur Regelung der Durchflussmenge für einen bestimmten Verbraucher verwendet, der erst seine volle Menge bei Öffnung der großen Auslassbohrung erhalten soll, vorher aber schon in vermindertem Umfang versorgt werden muss. Entsprechend des in dieser mit dem zweiten Ablauf 31 gekoppelten Leitung sich einstellenden Druckes wird dann des weiteren die Druckkammer 26 mit Betriebsmittel über eine Verbindungsleitung 33 zwischen dem zweiten Zulauf 28 und der Zuflussleitung 29 in Strömungsrichtung hinter den Funktionselementen 40, Wärmetauschern und/oder Filtern beaufschlagt. Das Betriebsmittel in der Druckkammer 26 bewirkt eine Kraft auf den Ventilkolben 4, die entgegen der Federkraft der Federeinrichtung 11 gerichtet ist. Wird der Druck in der Druckkammer 26 dabei so groß, dass die daraus resultierende Kraft auf den Ventilkolben 4 größer ist als die durch die Feder 11 aufgebrachte Kraft, wird die Federeinrichtung 11 zusammengedrückt, indem der Ventilkolben 4 gegen die Federeinrichtung 11 verschoben wird. Dabei wird die Verbindung zwischen dem Zulauf 5 und auch dem Ablauf 6 freigegeben, wobei jedoch die Verbindung zwischen der Abströmkammer 20 und dem Abströmablauf 22 immer noch versperrt ist. Dies wird durch die entsprechende Ausgestaltung und Dimensionierung der einzelnen Bereiche unterschiedlichen Durchmessers in axialer Richtung und damit Anordnung der einzelnen Steuerkanten in axialer Richtung realisiert. Erst wenn der Druck in der Druckkammer 26 und der Arbeitskammer 7 derart groß wird, dass eine weitere Verschiebung des Kolbens 4 gegenüber der Federeinrichtung 11 erzielt wird, gibt die Steuerkante 15, welche vom Bereich unterschiedlichen Durchmessers 12.1 und 12.2 gebildet wird, den Querschnitt zum Abströmablauf 22 frei. Dabei erfolgt das Abströmen normalerweise in einen Entlastungsraum, was jedoch bewirkt, dass vor den Funktionselementen 40 Wärmetauscher und/oder Filter entsprechend des möglichen Durchflußquerschnittes Betriebsmittel abgezweigt wird, das dann nicht mehr zum Aufbau der Drücke in den Kammern Arbeitskammer 7 und Druckkammer 26 zur Verfügung steht, aber kann z. B. auch direkt wieder an den Eingang einer Zahnradpumpe (Wirkungsgradverbesserung) angeschlossen werden. Durch die Dimensionierung des Ventilkolbens 4, insbesondere der einzelnen Bereiche unterschiedlichen Querschnittes, kann somit der maximal zulässige Arbeitsdruck festgelegt werden.

Die Figur 2 verdeutlicht anhand einer ebenfalls sehr stark schematisierten Darstellung eine weitere zweite Möglichkeit der konstruktiven Ausgestaltung eines erfindungsgemäßen hydraulischen Systems mit einer Ventileinrichtung 1.2, die durch eine sehr kompakte Ausgestaltung charakterisiert ist und insbesondere der Anschluss an einen Verbraucher aufgrund der geringen Baugröße in besonders kompakter Weise ausgeführt werden kann. Der Grundaufbau und das Grundprinzip entspricht im wesentlichen dem in der Figur 1 beschriebenen, weshalb für gleiche Elemente auch die gleichen Bezugszeichen verwendet werden. Dabei wird die Druckkammer 26.2 quasi mit von der Arbeitskammer 7.2 gebildet. Der Zulauf 28.2 entspricht dabei dem Zulauf 5.2. Auch hier umfasst die Ventileinrichtung 1.2, welche in Form eines Druckregelventiles 2.2 ausgeführt ist, ein Ventilgehäuse 3.2 und einen Ventilkolben 4.2, der am Ventilgehäuse in axialer Richtung verschiebbar geführt ist, wobei die Führung druck- und flüssigkeitsdicht erfolgt. Zwischen Ventilkolben 4.2 und Ventilgehäuse 3.2 bzw. dem Innenraum 23.2 ist eine Federeinrichtung 11.2 angeordnet. Diese stützt sich an einer Stirnfläche 34 des Innenraumes 23.2 und der zu dieser Stirnfläche 34 gerichteten Stirnfläche 13.2 des Ventilkolbens 4.2 ab. Der Ventilkolben 4.2 ist hier durch vier Bereiche unterschiedlichen Durchmessers charakterisiert, diese sind hier mit 35.1 bis 35.4 bezeichnet. Dabei sind die Bereiche 35.2 und 35.4 mit im wesentlichen gleichem Durchmesser wie der Innenraum 23.2 des Ventilgehäuses 3.2 ausgeführt. Diese beiden Bereiche 35.2 und 35.4 werden dabei druckdicht und flüssigkeitsdicht im Gehäuse 3.2 geführt. Zwischen den Bereichen 35.2 und 35.4 ist ein Bereich 35.3 angeordnet, der einen geringeren Durchmesser aufweist und somit mit seinem Außenumfang 36 und den an den Bereichen 35.2 und 35.4 zueinander weisenden Stirnflächen 37 und 38 eine Abströmkammer 20.2 bildet, welche in einem Funktionszustand der Ventileinrichtung 1.2, insbesondere des Ventilkolbens 4.2, einen Abströmzulauf 21.2 mit einem Abströmkanal 22.2 verbindet. Die Abströmkammer 20.2 ist dabei über den Abströmzulauf 21.2 mit der Zuflußleitung 29.2 gekoppelt, wobei diese Kopplung über die Verbindungsleitung 30.2 erfolgt und die Verbindungsleitung 30.2 in Strömungsrichtung in der Zuflußleitung 29.2 vor den Funktionselementen 40, dem Wärmetauscher und/oder dem Filter an die Zuflussleitung 29.2 angekoppelt ist. Ferner ist im Gehäuse ein Zulauf 5.2 und mindestens ein Ablauf 6.2 zum Anschluß an einen Verbraucher vorgesehen.

Beide Anschlüsse 5.2 und 6.2 sowie auch der Abströmzulauf 21.2 und der Abströmablauf 22.2 sind im dargestellten Fall in axialer Richtung betrachtet zueinander versetzt, d. h. in unterschiedlichen Ebenen angeordnet. Die Verbindung zwischen dem Zulauf 5.2 und dem Ablauf 6.2 erfolgt über eine Arbeitskammer 7.2, welche von der Stirnfläche 25.2 des Innenraumes 23.2, welche zum Kolben 4.2 hingewandt ist und den Außenabmessungen des Ventilkolbens 4.2 im Bereich 35.1 gebildet wird. Im einzelnen wird dabei der Arbeitsraum 7.2 von einer, vom Bereich 35.2 zur Stirnfläche 27 am Innenraum 23 weisenden Stirnfläche 39 sowie den äußeren Abmessungen im Bereich 35.1 und dem Innenraum 23.2 begrenzt. Der Bereich 35.2 bildet dabei eine Steuerkante, insbesondere der Übergang zwischen dem Bereich 35.2 zum Bereich 35.1, welche den Querschnitt zum Ablauf 6.2 freigibt oder versperrt.

Die Funktionsweise der Ventileinrichtung 1.2 kann wie folgt beschrieben werden:
Im entlasteten Zustand befindet sich der Ventilkolben 4 in einer Stellung, in welcher der Ablauf 6.2 sowie der Abströmablauf 22.2 versperrt sind. Die Zuflussleitung 29.2 ist dabei über eine Verbindungsleitung 30.2, welche vor den Funktionselementen 40, wie beispielsweise Filter oder Wärmetauscher angeordnet ist, mit dem Abströmzulauf 21.2 verbunden, während die Zuflußleitung 29.2 hinter den Funktionselementen, d.h. den Wärmetauschern und/oder Filtern mit dem Zulauf 5.2 zur Arbeitskammer 7.2 gekoppelt ist, welcher gleichzeitig den Zulauf 28.2 zur Druckkammer 26.2, welche von der Arbeitskammer 7.2 gebildet wird, bildet. Dabei gelangt aufgrund des geringen Widerstandes zuerst Betriebsmittel in die Abströmkammer 20.2 und erst dann, wenn in der Abströmkammer 20.2 ein Druck erreicht wird, der größer ist als der in den Leitungsverbindungen zum Zulauf 5.2 über diesen in die Druckkammer 26.2. Der sich dort aufbauende Druck bewirkt eine Kraft auf den Ventilkolben 4.2, welche zur Verschiebung des Ventilkolbens 4.2 gegen die Federeinrichtung 11.2 führt. Dabei wird zuerst der Ablauf 6.2 freigegeben und damit die Verbindung zwischen dem Zulauf 5.2 und dem Ablauf 6.2 zum Verbraucher. Solange der Druck in der Druckkammer 26.2 dabei einen gewissen Wert nicht überschreitet, erfolgt keine weitere Verschiebung des Ventilkolbens 4.2 und der Abströmablauf 22.2 bleibt versperrt. Überschreitet jedoch der Druck einen bestimmten Wert, wird die Federeinrichtung 11.2 weiter komprimiert und der Abströmablauf 22.2 wird freigegeben, welcher einen Übertritt aus der Zuflussleitung 29.2 zum Abströmablauf 22.2 bewirkt. Dies äußert sich auch im Druck in der Arbeitskammer 7.2, der dann ab diesem Zeitpunkt nicht mehr zunimmt bzw. auch wieder abnehmen kann.

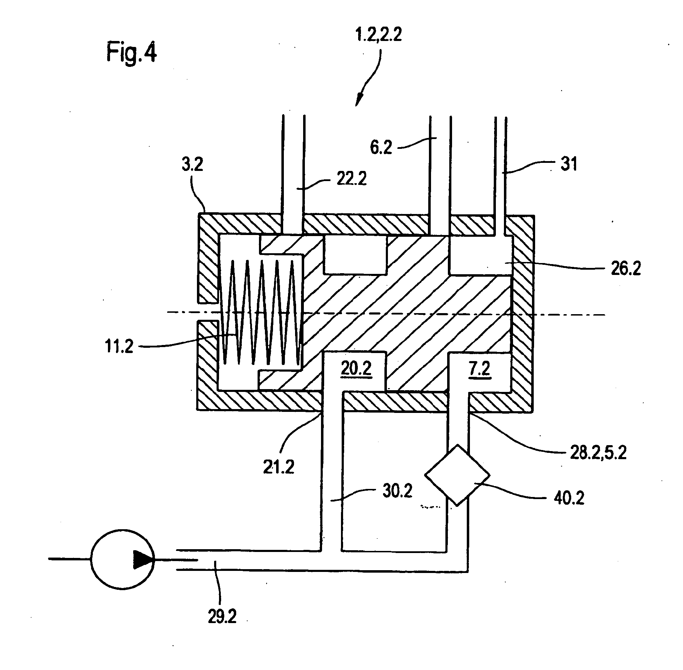

Figur 4 verdeutlicht eine weitere mögliche Ausführung eines hydraulischen Systems mit einer Ventileinrichtung 1.2 gemäß Figur 2 mit zwei Abläufen 6.2 und 31 im Grundzustand, d. h. entlastetem Zustand. Der Grundaufbau entspricht dem in Figur 2 beschriebenen, ausgenommen die Anordnung der Abläufe 6.2 und 31, weshalb für gleiche Elemente die gleichen Bezugszeichen verwendet werden. Die Anordnung von 6.2 erfolgt gegenüber dem Zulauf 5.2 wie in Figur 2 beschrieben. Der zusätzliche Ablauf 31 kann entweder ebenfalls in versetzten Ebenen vom Zulauf 5.2 oder einen gemeinsamen Ebene angeordnet werden. Bei dieser Lösung wird auch im Grundzustand immer ein Zulauf und damit Beaufschlagung des mit dem Ablauf 31 gekoppelten Verbrauches gewährleistet.

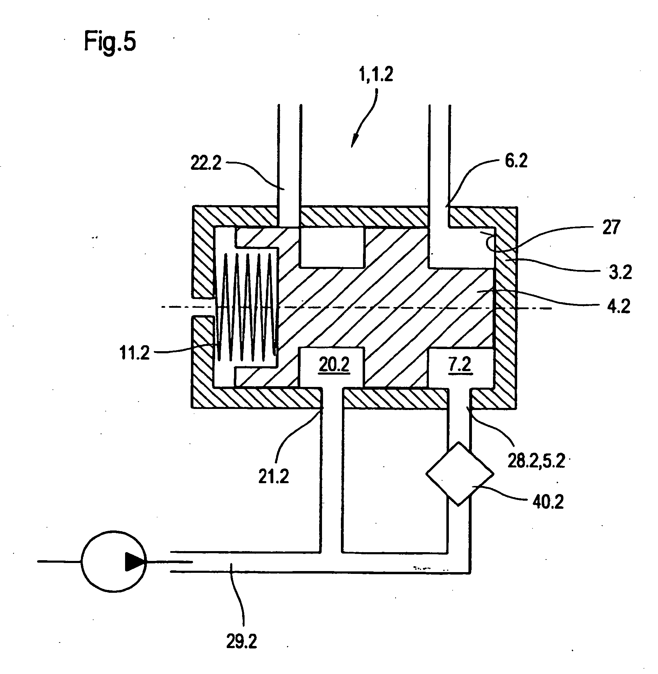

Figur 5 verdeutlicht eine weitere Abwandlung einer Ausführung gemäß Figur 2 mit Gewährleistung der Versorgung des Verbrauchers auch im entlasteten Zustand. Bei dieser ist ebenfalls nur ein Ablauf 6.2 vorgesehen, der jedoch anders als in Figur 2 dargestellt in einer Ebene mit dem Zulauf 5.2 angeordnet ist. Der übrige Grundaufbau entspricht dem in Figur 2 beschriebenen, weshalb für gleiche Elemente die gleichen Bezugszeichen verwendet werden. Die Anordnung dieses einen Ablaufes 6.2 kann jedoch auch versetzt zur Ebene des Zulaufes 5.2 erfolgen, wobei der Versatz in Richtung der Stirnfläche 27 des Gehäuses 3 erfolgt.

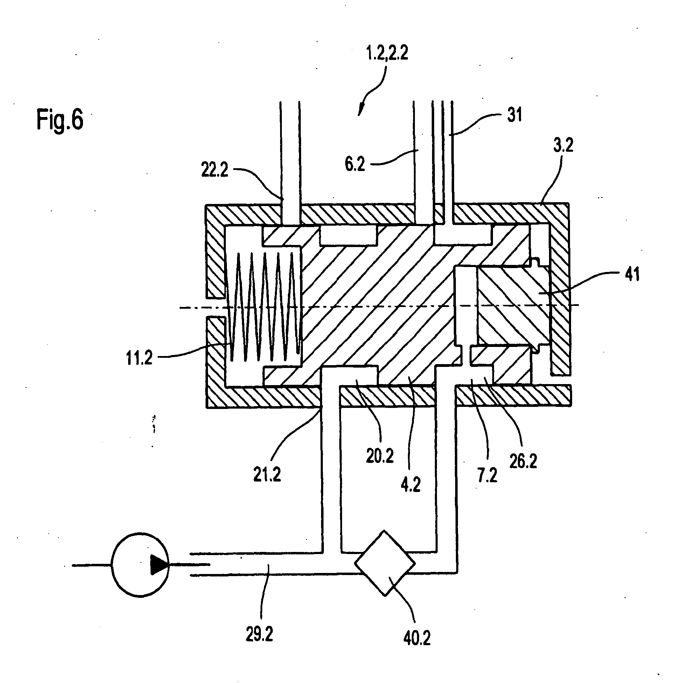

Figur 6 verdeutlicht eine weitere vorteilhafte Ausbildung einer Grundausführung gemäß Figur 2 mit zwei Abläufen 6.2 und 31, wobei mindestens einer in axialer Richtung betrachtet gegenüber dem Zulauf 5.2 versetzt angeordnet ist. Bei dieser Lösung werden die Druckkammer 26.2 und die Arbeitskammer 7.2 von einer Kammer gebildet. Diese wird vom Ventilkolben 4.2 und einem im Ventilgehäuse 3.2 angeordneten ortsfesten Einsatzelement 41 gebildet. Der Ventilkolben 4.2 ist an diesem geführt, wozu der Ventilkolben 4.2 eine Ausnehmung 42 aufweist. Diese Lösung bietet den Vorteil der Bereitstellung kleiner Flächen zur Realisierung der Verschiebung des Ventilkolbens 4.2 bei Druckbeaufschlagung und ferner Vorteile hinsichtlich der erforderlichen Dimensionierung der Federeinrichtung 11.2. Die Anordnung der Abströmkammer 20.2 erfolgt wie in den in den anderen Figuren beschriebenen Ausführungen. Dies gilt auch für die Funktionsweise.

Die erfindungsgemäße Lösung ist nicht auf die Ausführungen gemäß der Figuren 1 bis 6 beschränkt. Entscheidend ist, dass die Abströmfunktion in der Ventileinrichtung unabhängig vom Zulauf zur Arbeitskammer realisiert wird und mit beliebigen Druckregel- und Begrenzungsfunktionen kombinierbar ist. Diese werden über das Kräftegleichgewicht zwischen Energiespeichereinrichtung und Druckkammer und die damit verbundene Stellung des Kolbens gegenüber den einzelnen Zu- und Abläufen, insbesondere zur Arbeitskammer, realisiert.

### Bezugszeichenliste

- 1; 1.2: Ventileinrichtung
- 2; 2.2: Druckregelventil
- 3; 3.2: Ventilgehäuse
- 4; 4.2: Ventilkolben
- 5; 5.2: Zulauf
- 6; 6.2: Ablauf
- 7; 7.2: Arbeitskammer
- 8.1, 8.2, 8.3: Bereiche unterschiedlichen Durchmessers
- 9: Steuerkante
- 10: Steuerkante
- 11: Federeinrichtung
- 12.1, 12.2: Bereiche unterschiedlichen Durchmessers
- 13: Stirnfläche
- 14: Stirnfläche
- 15: Steuerkante
- 16: Stirnfläche
- 17: Steuerkante
- 18: Stirnfläche
- 19: Außenumfang
- 20: Abströmkammer
- 21; 21.2: Abströmzulauf
- 22; 22.2: Abströmablauf
- 23; 23.2: Innenraum
- 24: Abschnitt geringeren Durchmessers
- 25: Stirnfläche
- 26; 26.2: Druckkammer
- 27: Stirnfläche
- 28; 28.2: Zulauf
- 29; 29.2: Zuflussleitung
- 30; 30.2: Verbindungsleitung
- 31: zweiter Ablauf
- 32: Verbindungsleitung
- 33: Verbindungsleitung
- 34: Stirnfläche
- 35.1 bis 35.4: Bereiche unterschiedlichen Durchmessers
- 36: Außenumfang
- 37: Stirnfläche
- 38: Stirnfläche
- 39: Stirnfläche
- 40: Funktionselemente
- 41: Einsatzelement
- 42: Ausnehmung

## Patentansprüche

1. Hydraulisches System
1.1 mit mindestens einem Verbraucher,
1.2 mit einer Zuflussleitung (29; 29.2) zum Verbraucher;
1.3 mit Funktionselementen (40) in der Zuflussleitung (29; 29.2);
1.4 mit einer Ventileinrichtung (1; 1.2) zur Druckbegrenzung oder Regelung, umfassend die folgenden Merkmale:
1.4.1 ein Ventilgehäuse (3; 3.2) und einen im Ventilgehäuse (3; 3.2) relativ zu diesem in axialer Richtung verschiebbaren, Steuerkanten (9, 10 17, 15) aufweisenden Ventilkolben (4; 4.2), welcher mit dem Ventilgehäuse (3: 3.2) eine Arbeitskammer bildet;
1.4.2 einen der Arbeitskammer (7; 7.2) zugeordneten, mit der Zuflussleitung Arbeitskammer und Verbraucher koppelbaren (29; 29.2) in Strömungsrichtung betrachtet im Bereich hinter den Funktionselementen (40) koppelbaren Zulauf (5; 5.2) zur wenigstens einen der Arbeitskammer (7; 7.2) zugeordneten mit dem Ablauf (6; 6.2) von der Arbeitskammer, wobei die Freigabe von Zulauf (5; 5.2) und Ablauf (6; 6.2) durch die Stellung des Ventilkolbens (4; 4.2) bedingt ist;
1.4.3 eine von den Steuerkanten des Ventilkolbens (4; 4.2) und dem Ventilgehäuse (3;3.2) gebildete Abströmkammer (20; 20.2);
1.4.4 einen Abströmzulauf (21; 21.2) zur Abströmkammer zur Koppelung mit einer mit der Zuflussleitung (29; 29.2) in Strömungsrichtung betrachtet im Bereich vor den Funktionselementen (40) koppelbaren Verbindungsleitung (30; 30.2) und einen Abströmablauf (22; 22.2) von der Abströmkammer, wobei bei Erreichen eines bestimmten vordefinierten Arbeitsdruckes eine Verschiebung des Ventilkolbens (4;4.2) eine Freigabe des Abströmablaufs (22; 22.2) bewirkt;
**gekennzeichnet durch** folgende Merkmale:
1.5 die Abströmkammer (20; 20.2) ist frei von einer direkten Verbindung zur Arbeitskammer (7; 7.2) und dem der Arbeitskammer (7; 7.2) zugeordneten Zulauf (5; 5.2);
1.6 die Funktionselemente umfassen einen Wärmetauscher und/oder eine Filtereinrichtung.

2. Hydraulisches System nach Anspruch 1, **gekennzeichnet durch** die folgenden Merkmale:
2.1 mit einer zwischen Ventilgehäuse (3; 3.2) und einer zu diesem weisenden Stirnfläche (13) des Ventilkolbens (4; 4.2) angeordneten Energiespeichereinrichtung (11);
2.2 mit einer vom Ventilkolben (4; 4.2) und dem Ventilgehäuse (3; 3.2) begrenzten und hinsichtlich der Abmessungen veränderlichen Druckkammer (26; 26.2) zur Beaufschlagung des Ventilkolbens (4; 4.2) auf seiner der Energiespeichereinrichtung (11) weggerichteten Stirnseite (25; 25.2) und einem Zulauf (28;28.2) für das Druckmittel.

3. Hydraulisches System nach einem der Ansprüche 1 oder 2, **dadurch gekennzeichnet, dass** die Dimensionierung von Ventilkolben (4; 4.2), Steuerkanten (9, 10, 17, 15) derart erfolgt, dass in keiner Funktionsstellung der Zulauf (5; 5.2) zur Arbeitskammer (7; 7.2) und der Abströmzulauf (21; 21.2) gemeinsam in die Abströmkammer (20; 20.2) münden.

4. Hydraulisches System nach einem der Ansprüche 1 bis 3, **dadurch gekennzeichnet, dass** der Abströmzulauf (21; 21.2) und der Abströmablauf (22; 22.2) in axialer Richtung versetzt zueinander angeordnet sind.

5. Hydraulisches System nach einem der Ansprüche 2 bis 4, **dadurch gekennzeichnet, dass** der Innenraum (23; 23.2) des Ventilgehäuses (3; 3.2) in axialer Richtung derart bemessen ist, dass im entlasteten oder noch teilweise vorgespannten Zustand der Energiespeichereinheit (11) die von der Energiespeichereinrichtung (11) weggerichtete Stirnfläche (25) des Ventilkolbens (4; 4.2) an der zum Ventilkolben (4; 4.2) gerichteten Stirnfläche (27) des Ventilgehäuses (3; 3.2) anliegt.

6. Hydraulisches System nach einem der Ansprüche 2 bis 4, **dadurch gekennzeichnet, dass** der Innenraum (23; 23.2) des Ventilgehäuses (3; 3.2) in axialer Richtung derart bemessen ist, dass im entlasteten Zustand der Energiespeichereinheit (11) ein Zwischenraum zwischen Ventilgehäuse (3; 3.2) und von der Energiespeichereinheit (11) weggerichteter Stirnfläche (25) des Ventilkolbens (4; 4.2) gebildet wird.

7. Hydraulisches System nach einem der Ansprüche 5 oder 6, **dadurch gekennzeichnet, dass** die von der Energiespeichereinheit (11) weggerichtete Stirnfläche (25.2) des Ventilkolbens (4; 4.2) von einem Bereich (24) mit geringeren äußeren Abmessungen als die des Innenraumes (23; 23.2) des Ventilgehäuses (3; 3.2) gebildet wird.

8. Hydraulisches System nach Anspruch 5 oder 6, **dadurch gekennzeichnet, dass** die von der Energiespeichereinheit (11) weggerichtete Stirnfläche (25) des Ventilkolbens (4; 4.2) von einem Bereich gleicher Außenabmessungen wie die Abmessungen des Innenraumes (23; 23.2) des Ventilgehäuses (3; 3.2) gebildet wird.

9. Hydraulisches System nach einem der Ansprüche 2 bis 8, **gekennzeichnet durch** die folgenden Merkmale:
9.1 die Druckkammer (26.2) wird von der Arbeitskammer (7.2) gebildet;
9.2 der Zulauf (28.2) für Druckmittel wird vom Zulauf (5.2) zur Arbeitskammer (7.2) gebildet.

10. Hydraulisches System nach Anspruch 9, **gekennzeichnet durch** die folgenden Merkmale:
10.1 der Ventilkolben (4.2) weist Bereiche unterschiedlichen Durchmessers auf, welche die Steuerkanten zur Begrenzung von Abströmkammer (20; 20.2), Arbeits- und Druckkammer (7.2; 26.2) bilden;
10.2 die Arbeits- und Druckkammer (7.2; 26.2) wird von der vom Energiespeicher (11) weggerichteten Stirnfläche des Ventilkolbens und dem Ventilgehäuse (3.2) begrenzt;
10.3 der Zulauf und Ablauf (5.2; 28.2; 6.2) sind in axialer Richtung versetzt zueinander angeordnet, wobei der Ablauf (6.2) in axialer Richtung ausgehend von der Energiespeichereineit (11) betrachtet vor dem Zulauf (5.2; 28.2) liegt.

11. Hydraulisches System nach einem der Ansprüche 2 bis 8, **dadurch gekennzeichnet, dass** die Druckkammer (26) und die Arbeitskammer (7) von unterschiedlichen Kammern gebildet werden und der Zulauf (28) für Druckmittel dem Zulauf (5) zur Arbeitskammer (7) in axialer Richtung von der Energiespeichereinheit (11) aus betrachtet nachgeordnet ist

12. Hydraulisches System nach Anspruch 11, **gekennzeichnet durch** die folgenden Merkmale:
12.1 der Ventilkolben (4) weist Bereiche (8.1; 8.2; 8.3; 12.1; 12.2; 24) unterschiedlichen Durchmessers auf, welche die Steuerkanten (15; 17; 9; 10) zur Begrenzung von Abströmkammer (20), Arbeitskammer (7) und Druckkammer (26) bilden;
12.2 die Druckkammer (26) wird von der vom Energiespeicher (11) weggerichteten Stirnfläche (25) des Ventilkolbens (4) und dem Ventilgehäuse (3) begrenzt;
12.3 der Zulauf (5) und Ablauf (6) sind in axialer Richtung versetzt zueinander angeordnet, wobei der Ablauf (6) in axialer Richtung ausgehend von der Energiespeichereineit (11) betrachtet vor dem Zulauf (5) liegt.

13. Hydraulisches System nach einem der Ansprüche 11 oder 12, **dadurch gekennzeichnet, dass** dem Arbeitsraum (7) ein zweiter Ablauf (31) zugeordnet ist, welcher in einer axialen Ebene mit dem Zulauf (5) oder nur geringfügig versetzt zu diesem angeordnet ist.

14. Hydraulisches System nach einem der Ansprüche 2 bis 13, **dadurch gekennzeichnet, dass** die Energiespeichereinrichtung (11) eine Feder umfaßt

15. Hydraulisches System nach einem der Ansprüche 2 bis 10, **dadurch gekennzeichnet, dass** die Energiespeichereinrichtung (11) eine elastische Membran umfasst.

16. Hydraulisches System nach Anspruch 15, **dadurch gekennzeichnet, dass** alle Funktionselemente in der Zuflussleitung (29; 29.2) dem Abströmzulauf (21; 21.2) und dem Zulauf (5; 5.2) zur Arbeitskammer (7; 7.2) angeordnet sind.

## Claims

1. A hydraulic system, comprising
1.1. at least one consumer;
1.2. a feed line (29; 29.2) to the consumer;
1.3. functional elements (40) in the feed line (29; 29.2);
1.4. a valve device (1; 1.2) for pressure limitation or regulation, comprising the following features:
1.4.1. a valve housing (3;3.2) and a valve piston (4; 4.2) which is displaceable in the valve housing (3; 3.2) relative to the same in the axial direction, comprises control edges (9, 10, 17, 15) and forms with the valve housing (3; 3.2) a working chamber;
1.4.2. an inlet (5; 5.2) to the working chamber which is associated with the working chamber (7; 7.2) and can be coupled with the feed line (29; 29.2) in the region behind the functional elements (40) when seen in the direction of flow, and at least one discharge (6; 6.2) from the working chamber which is associated with the working chamber (7; 7.2) and can be coupled with the consumer, with the release of inlet (5; 5.2) and discharge (6; 6.2) being caused by the position of the valve piston (4; 4.2);
1.4.3. an outflow chamber (20; 20.2) formed by the control edges of the valve piston (4; 4.2) and the valve housing (3; 3.2);
1.4.4. an outflow inlet (21; 21.2) to the outflow chamber for coupling with a connecting line (30; 30.2) which can be coupled with the feed line (29; 29.2) in the region before the functional elements (40) when seen in the direction of flow, and an outflow discharge (22; 22.2) from the outflow chamber, with a displacement of the valve piston (4; 4.2) causing a release of the outflow discharge (22; 22.2) upon reaching a certain predetermined working pressure;
**characterized by** the following features:
1.5. the outflow chamber (20; 20.2) is free from any direct connection to the working chamber (7; 7.2) and the inlet (5; 5.2) associated with the working chamber (7; 7.2);
1.6. the functional elements comprise a heat exchanger and/or a filter device.

2. A hydraulic system according to claim 1, **characterized by** the following features:
2.1. with an energy storage device (11) arranged between the valve housing (3; 3.2) and a face surface (13) of the valve piston (4; 4.2) facing towards the same;
2.2. with a pressure chamber (26; 26.2) delimited by the valve piston (4; 4.2) and the valve housing (3; 3.2) and changeable with respect to the dimensions for pressurizing the valve piston (4; 4.2) on its face side (25; 25.2) averted from the energy storage device (11) and an inlet (28; 28.2) for the pressure medium.

3. A hydraulic system according to one of the claims 1 or 2, **characterized in that** the dimensioning of the valve pistons (4; 4.2), control edges (9, 10, 17, 15) occurs in such a way that in none of the functional positions the inlet (5; 5.2) to the working chamber (7; 7.2) and the outflow inlet (21; 21.2) jointly open into the outflow chamber (20; 20.2).

4. A hydraulic system according to one of the claims 1 to 3, **characterized in that** the outflow inlet (21; 21.2) and the outflow discharge (22; 22.2) are arranged in the axial direction offset to each other.

5. A hydraulic system according to one of the claims 2 to 4, **characterized in that** the internal space (23; 23.2) of the valve housing (3; 3.2) is dimensioned in the axial direction in such a way that in the relaxed or partly pretensioned state of the energy storage unit (11) the face surface (25) of the valve piston (4; 4.2) averted from the energy storage device (11) rests on the face surface (27) of the valve housing (3; 3.2) facing towards the valve piston (4; 4.2).

6. A hydraulic system according to one of the claims 2 to 4, **characterized in that** the internal space (23; 23.2) of the valve housing (3; 3.2) is dimensioned in the axial direction in such a way that in the relaxed state of the energy storage unit (11) a cavity is formed between the valve housing (3; 3.2) and the face surface (25) of the valve piston (4; 4.2) averted from the energy storage unit (11).

7. A hydraulic system according to one of the claims 5 or 6, **characterized in that** the face surface (25.2) of the valve piston (4; 4.2) averted from the energy storage unit (11) is formed by a region (24) with smaller external dimensions than that of the internal space (23; 23.2) of the valve housing (3; 3.2).

8. A hydraulic system according to claim 5 or 6, **characterized in that** the face surface (25) of the valve piston (4; 4.2) averted from the energy storage unit (11) is formed by a region of the same external dimensions as the dimensions of the internal space (23; 23.2) of the valve housing (3; 3.2).

9. A hydraulic system according to one of the claims 2 to 8, **characterized by** the following features:
9.1. the pressure chamber (26.2) is formed by the working chamber (7.2);
9.2. the inlet (28.2) for pressure media is formed by the inlet (5.2) to the working chamber.

10. A hydraulic system according to claim 9, **characterized by** the following features:
10.1. the valve piston (4.2) has regions of different diameters which form the control edges for delimiting the outflow chamber (20; 20.2), working and pressure chamber (7.2; 26.2);
10.2. the working and pressure chamber (7.2; 26.2) is delimited by the face surface of the valve piston averted from the energy storage unit (11) and the valve housing (3.2);
10.3. the inlet and discharge (5.2; 28.2; 6.2) are arranged offset to each other in the axial direction, with the discharge (6.2) being situated before the inlet (5.2; 28.2) in the axial direction when seen starting from the energy storage unit (11);

11. A hydraulic system according to one of the claims 2 to 8, **characterized in that** the pressure chamber (26) and the working chamber (7) are formed by different chambers and the inlet (28) for the pressure medium is arranged downstream from the inlet (5) to the working chamber (7) in the axial direction when seen from the energy storage unit (11).

12. A hydraulic system according to claim 11, **characterized by** the following features:
12.1. the valve piston (4) comprises regions (8.1; 8.2; 8.3; 12.1; 12.2; 24) of different diameters which form the control edges (15; 17, 9; 10) for delimiting the outflow chamber (20), working chamber (7) and the pressure chamber (26);
12.2. the pressure chamber (26) is delimited by the face surface (25) of the valve piston (4) averted from the energy storage unit (11) and the valve housing (3);
12.3. the inlet (5) and the discharge (6) are arranged offset to each other in the axial direction, with the discharge (6) being situated before the inlet (5) in the axial direction when seen starting from the energy storage unit (11).

13. A hydraulic system according to one of the claims 11 or 12, **characterized in that** the working chamber (7) is associated with a second discharge (31) which is arranged in an axial plane with the inlet (5) or only slightly offset to the same.

14. A hydraulic system according to one of the claims 2 to 13, **characterized in that** the energy storage device (11) comprises a spring.

15. A hydraulic system according to one of the claims 2 to 10, **characterized in that** the energy storage device (11) comprises an elastic membrane.

16. A hydraulic system according to claim 15, **characterized in that** all functional elements in the feed line (29; 29.2) are associated with the outflow inlet (21; 21.2) and the inlet (5; 5.2) to the working chamber (7; 7.2).

## Revendications

1. Système hydraulique
1.1 avec au moins un consommateur ;
1.2 avec une conduite d'arrivée (29 ; 29.2) vers le consommateur ;
1.3 avec des éléments fonctionnels (40) dans la conduite d'arrivée (29 ; 29.2) ;
1.4 avec un dispositif de soupape (1 ; 1.2) pour la limitation de pression ou la régulation, ayant les caractéristiques suivantes :
1.4.1 un corps de soupape (3 ; 3.2) et un piston de soupape (4 ; 4.2) mobile dans le sens axial dans le corps de soupape (3 ; 3.2) par rapport à celui-ci et présentant des arêtes de régulation (9, 10 17, 15), qui forme avec le corps de soupape (3 ; 3.2) une chambre de travail ;
1.4.2 une arrivée (5 ; 5.2) vers la chambre de travail, associée à la chambre de travail (7 ; 7.2) et pouvant être couplée à la conduite d'arrivée (29 ; 29.2) en aval des éléments fonctionnels (40), vue dans le sens de l'écoulement, et au moins un écoulement (6 ; 62) de la chambre de travail, associé à la chambre de travail (7 ; 7.2) et pouvant être couplé au consommateur, la libération de l'arrivée (5 ; 5.2) et de l'écoulement (6 ; 6.2) étant réalisée par la position du piston de soupape (4 ; 4.2) ;
1.4.3 une chambre d'évacuation (20 ; 20.2) formée par les arêtes de régulation du piston de soupape (4 ; 4.2) et le corps de soupape (3 ; 3.2) ;
1.4.4 une arrivée d'évacuation (21 ; 21.2) vers la chambre d'évacuation pour le couplage avec une conduite de liaison (30 ; 30.2) pouvant être couplée à la conduite d'arrivée (29 ; 29.2) en amont des éléments fonctionnels (40), vue dans le sens de l'écoulement, et un écoulement d'évacuation (22 ; 22.2) de la chambre d'évacuation, une translation du piston de soupape (4 ; 4.2) réalisant la libération de l'écoulement d'évacuation (22 ; 22.2) lorsqu'une certaine pression de travail prédéfinie est atteinte;
**caractérisé en ce que** :
1.5 la chambre d'évacuation (20 ; 20.2) ne présente pas de communication directe avec la chambre de travail (7 ; 7.2) et l'arrivée (5 ; 5.2) associée à la chambre de travail (7 ; 7.2) ;
1.6 les éléments fonctionnels comprennent un échangeur de chaleur et/ou un dispositif de filtration.

2. Système hydraulique selon la revendication 1, **caractérisé en ce que** :
2.1 il est prévu un dispositif d'accumulation d'énergie (11) entre le corps de soupape (3 ; 3.2) et une face d'extrémité (13) du piston de soupape (4 ; 4.2) dirigée vers celui-ci ;
2.2 il est prévu une chambre de pression (26 ; 26.2) délimitée par le piston de soupape (4 ; 4.2) et le corps de soupape (3 ; 3.2) et de dimensions variables pour agir sur le piston de soupape (4 ; 4.2) sur sa face d'extrémité (25 ; 25.2) opposée au dispositif d'accumulation d'énergie (11) et une arrivée (28 ; 28.2) pour le fluide sous pression.

3. Système hydraulique selon l'une des revendications 1 ou 2, **caractérisé en ce que** le dimensionnement du piston de soupape (4 ; 4.2), des arêtes de régulation (9, 10, 17, 15) est tel que l'arrivée (5 ; 5.2) vers la chambre de travail (7 ; 7.2) et l'arrivée d'évacuation (21 ; 21.2) ne débouchent ensemble dans la chambre d'évacuation (20 ; 20.2) dans aucune position de fonctionnement.

4. Système hydraulique selon l'une des revendications 1 à 3, **caractérisé en ce que** l'arrivée d'évacuation (21 ; 21.2) et l'écoulement d'évacuation (22; 22.2) sont décalées l'une par rapport à l'autre dans le sens axial.

5. Système hydraulique selon l'une des revendications 2 à 4, **caractérisé en ce que** l'espace intérieur (23 ; 23.2) du corps de soupape (3 ; 3.2) est dimensionné dans le sens axial de telle sorte que dans l'état sans charge ou partiellement précontraint de l'unité d'accumulation d'énergie (11), la face d'extrémité (25) du piston de soupape (4 ; 4.2) opposée au dispositif d'accumulation d'énergie (11) repose sur la face d'extrémité (27) du corps de soupape (3 ; 3.2) dirigée vers le piston de soupape (4 ; 4.2).

6. Système hydraulique selon l'une des revendications 2 à 4, **caractérisé en ce que** l'espace intérieur (23 ; 23.2) du corps de soupape (3 ; 3.2) est dimensionné dans le sens axial de telle sorte que dans l'état sans charge ou partiellement précontraint de l'unité d'accumulation d'énergie (11), un espace intermédiaire soit formé entre le corps de soupape (3 ; 3.2) et la face d'extrémité (25) du piston de soupape (4 ; 4.2) opposée au dispositif d'accumulation d'énergie (11).

7. Système hydraulique selon l'une des revendications 5 ou 6, **caractérisé en ce que** die la face d'extrémité (25.2) du piston de soupape (4 ; 4.2) opposée au dispositif d'accumulation d'énergie (11) est formée par une zone (24) du corps de soupape (3 ; 3.2) ayant de plus petites dimensions extérieures que l'espace intérieur (23 ; 23.2) du corps de soupape (3 ; 3.2).

8. Système hydraulique selon la revendication 5 ou 6, **caractérisé en ce que** la face d'extrémité (25) du piston de soupape (4 ;4.2) opposée au dispositif d'accumulation d'énergie (11) est formée par une zone du corps de soupape (3 ; 3.2) ayant les mêmes dimensions que l'espace intérieur (23 ; 23.2) du corps de soupape (3 ; 32).

9. Système hydraulique selon l'une des revendications 2 à 8, **caractérisé en ce que**
9.1 la chambre de pression (26.2) est formée par la chambre de travail (7.2) ;
9.2 l'arrivée (28.2) de fluide sous pression est formée par l'arrivée (5.2) vers la chambre de travail (7.2).

10. Système hydraulique selon la revendication 9, **caractérisé en ce que**
10.1 le piston de soupape (4.2) présente des zones de diamètre différent, qui forment les arêtes de régulation pour délimiter la chambre d'évacuation (20 ; 20.2), la chambre de travail et de pression (7.2 ; 26.2) ;
10.2 la chambre de travail et de pression (7.2 ; 26.2) est formée par la face d'extrémité du piston de soupape opposée à l'accumulateur d'énergie (11) et par le corps de soupape (3.2) ;
10.3 l'arrivée et l'écoulement (5.2 ; 28.2 ; 6.2) sont décalés l'un par rapport à l'autre dans le sens axial, l'écoulement (6.2) se trouvant en amont de l'arrivée (5.2 ; 28.2) dans le sens axial, vu à partir de l'unité d'accumulation d'énergie (11).

11. Système hydraulique selon l'une des revendications 2 à 8, **caractérisé en ce que** la chambre de pression (26) et la chambre de travail (7) sont formées par des chambres différentes et l'arrivée (28) de fluide sous pression est disposée en aval de l'arrivée (5) vers la chambre de travail (7) dans le sens axial, vue à partir de l'unité d'accumulation d'énergie (11).

12. Système hydraulique selon la revendication 11, **caractérisé en ce que**
12.1 le piston de soupape (4) présente des zones (8.1 ; 8.2 ; 8.3 ; 12.1 ; 12.2 ; 24) de diamètre différent qui forment les arêtes de régulation (15 ; 17 ; 9 ; 10) pour délimiter la chambre d'évacuation (20), la chambre de travail (7) et la chambre de pression (26) ;
12.2 la chambre de pression (26) est délimitée par la face d'extrémité (25) du piston de soupape (4) opposée à l'accumulateur d'énergie (11) et par le corps de soupape (3) ;
12.3 l'arrivée (5) et l'écoulement (6) sont décalés l'un par rapport à l'autre dans le sens axial, l'écoulement (6) se trouvant en amont de l'arrivée (5) dans le sens axial, vu à partir de l'unité d'accumulation d'énergie (11).

13. Système hydraulique selon l'une des revendications 11 ou 12, **caractérisé en ce que** l'espace de travail (7) est associé à un deuxième écoulement (31) qui est disposé dans le même plan axial que l'arrivée (5) ou très légèrement décalé par rapport à celle-ci.

14. Système hydraulique selon l'une des revendications 2 à 13, **caractérisé en ce que** le dispositif d'accumulation d'énergie (11) comprend un ressort.

15. Système hydraulique selon l'une des revendications 2 à 10, **caractérisé en ce que** le dispositif d'accumulation d'énergie (11) comprend une membrane élastique.

16. Système hydraulique selon la revendication 15, **caractérisé en ce que** tous les éléments fonctionnels in sont disposés dans la conduite d'arrivée (29 ; 29.2), l'arrivée d'évacuation (21 ; 21.2) et l'arrivée (5 ; 5.2) vers la chambre de travail (7 ; 7.2).
